# EUROPÄISCHE PATENTANMELDUNG

(11) **EP 0 652 358 A2**
(43) Veröffentlichungstag der Anmeldung: **10.05.1995**
(21) Anmeldenummer: 94114642.5
(22) Anmeldetag: 16.09.1994
(51) Int. Cl.: F02D 41/14, F02D 41/22

(54) **Verfahren zur Überprüfung der Funktionsfähigkeit von Lambdasonden**

(30) Priorität: 30.09.1993 DE 4333412
(71) Anmelder: SIEMENS AKTIENGESELLSCHAFT, D-80333 München (DE); Bayerische Motoren Werke Aktiengesellschaft, 80788 München (DE)
(72) Erfinder: Ketterer, Alexander, D-93051 Regensburg (DE); Krauss, Michael, D-81369 München (DE); Treinies, Stefan, D-93073 Neutraubling (DE)
(74) Vertreter: Fuchs, Franz-Josef, Dr.-Ing.

(57) **Zusammenfassung**

Die Erfindung betrifft ein Verfahren zur Überprüfung der dynamischen Funktionsfähigkeit von Lambdasonden, durch Messen der Verweilzeiten, innerhalb derer das Lambdasondensignal ein fettes bzw. mageres Gemisch anzeigt und Vergleich dieser Zeiten mit betriebspunktabhängig gespeicherten Grenzwerten.

## Beschreibung

Die Erfindung betrifft ein Verfahren zur Überprüfung der dynamischen Funktionsfähigkeit von Lambdasonden gemäß dem Oberbegriff von Patentanspruch 1.

Es ist bekannt, bei Brennkraftmaschinen die Schadstoffemissionen durch katalytische Nachbehandlung zu verringern.

Eine effiziente katalytische Nachbehandlung setzt allerdings eine bestimmte Zusammensetzung des Abgases voraus, ein sogenanntes stöchiometrisches Gemisch. Hierzu dient eine Gemischregelung mittels einer sogenannten Lambdasonde, durch die die Gemischzusammensetzung periodisch in engen Grenzen um den Sollwert geregelt wird. Dabei werden beispielsweise Lambdasonden eingesetzt, die bei magerem Kraftstoff-/Luftgemisch eine große Spannung und bei fettem Kraftstoff-/Luftgemisch eine kleine Spannung abgeben; dazwischen liegt ein Spannungssprung , der für λ = 1 charakteristisch ist (Sprungsonde).

Um die von Gesetzgebern und Umweltbehörden geforderten Abgasgrenzwerte einzuhalten, ist es notwendig, die Fahrzeuge mit Diagnoseeinrichtungen auszustatten, die es u.a. ermöglichen, die Fehlfunktionen von Sensoren und Komponenten die mit der Steuerung oder Betätigung abgasrelevanter Teile verbunden sind, zu erfassen und entsprechende Fehlermeldungen auszugeben.

Insbesondere können die Sonden im Laufe des Betriebes defekt werden, die Gemischzusammensetzung wird in Folge falsch geregelt, die Abgase werden nicht mehr korrekt entgiftet und auf Dauer wird dann sogar der Katalysator beschädigt.

Es ist deswegen notwendig, die Funktionsfähigkeit der Lambdasonde zu überwachen.

Aus der DE-A-2 530 849 ist ein Detektionssystem zum Feststellen des Ausfalls eines Abgasfühlers in einem Brennstoffsteuersystem einer Brennkraftmaschine bekannt.
Dabei stellt es ein Merkmal der Qualität des Fühlers dar, wenn der Übergang von einem hohen Spannungspegel zu einem niedrigen Spannungspegel innerhalb eines vorbestimmten Intervalls auftritt, wenn das Abgas von einer fetten Brennstoffmischung zu einer mageren Brennstoffmischung geändert wird. Wenn der Fühler innerhalb einer gegebenen Zeitperiode diesen Übergang nicht durchläuft und zwar innnerhalb des vorbestimmten Intervalls, so ist dies ein Kennzeichen dafür, daß der Fühler ausgefallen ist und eine an den Fühler angeschlossene Schaltung liefert ein Warnsignal.

Aufgabe der vorliegenden Erfindung ist es, ein Verfahren anzugeben, das es auf relativ einfache Weise gestattet, die dynamische Funktionsfähigkeit von Lambdasonden zuverlässig zu überprüfen.

Gelöst wird dies durch die Merkmale des Patentanspruches 1. Vorteilhafte Weiterbildungen sind in den Unteransprüchen gekennzeichnet.

Liegen sowohl die Fett- als auch die Mager-Verweilzeiten des Ausgangssignals der Lambdasonde oberhalb der zuvor am Prüfstand mittels korrekter Lambdasonden ermittelten Grenzwerte oder entsprechen sie diesem Grenzwert, wird die Lambdasonde als defekt eingestuft. Liegen die Verweilzeiten dagegen unterhalb der Grenzwerte, so funktioniert die Lambdasonde korrekt. Die Grenzwerte für die Fett - und Magerverweilzeiten sind abhängig vom Betriebspunkt der Brennkraftmaschine und werden deshalb beispielsweise bei einer luftmassengeführten Steuerung der Brennkraftmaschine in Abhängigkeit von der angesaugten Luftmasse und der Drehzahl der Brennkraftmaschine einem Kennfeld entnommen.
Bei einer saugrohrdruckgeführten Motorsteuerung dagegen sind diese Grenzwerte abhängig vom Saugrohrdruck und der Drehzahl im Kennfeld abgelegt.

Zur Überprüfung der Verweilzeiten ist es notwendig, daß sich die Brennkraftmaschine während des Prüfzykluses in einem annähernd stationären Betriebszustand befindet. In diesem Zustand ist die Prüfung aber dann möglich, ohne in die Lambda-Regelung störend einzugreifen.

Die Überprüfung wird solange durchgeführt, bis eine vorgegebene Anzahl von Überprüfungszyklen durchlaufen wurde. Werden zwischenzeitlich die Überprüfungsbedingungen verletzt, so wird die Diagnose unterbrochen und bei erneutem Erfüllen der Bedingungen fortgesetzt. Die Überprüfung wird beendet, wenn die Mindestanzahl an überprüften Fett- und Magerschwingungen erreicht ist.

Das Verfahren wird im folgenden anhand der Zeichnung noch näher erläutert.Dabei zeigen:
- Figur 1: einen typischen Verlauf einer Sondenausgangsspannung abhängig von der Gemischzusammensetzung und
- Figur 2: schematisch den Ablauf eines Ausführungsbeispiels des erfindungsgemäßen Verfahrens.

Bei diesem Ausführungsbeispiel wird angenommen, daß die Lambdasonde bei einem mageren Gemisch einen höheren Spannungswert ausgibt als bei einem fetten Gemisch. Das erfindungsgemäße Verfahren funktioniert in analoger Weise auch bei Lambdasonden, die eine entgegengesetzte Spannungs-/Gemischzuordnung aufweisen.

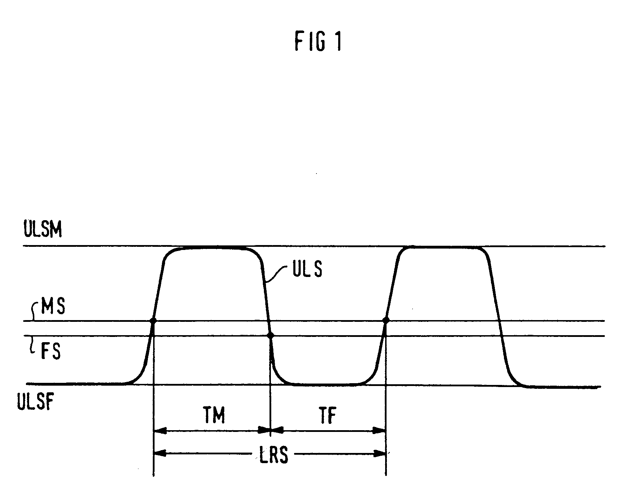

Zur Überprüfung der Fett- und Magerverweilzeiten werden die Lambdasonden-Signallagen ausgewertet. Die Magerverweilzeit ist in Figur 1 mit TM bezeichnet und ist die Zeit zwischen dem Überschreiten des Lambdasondensignals ULS über die Erkennungsschwelle MS von Fett nach Mager bis zur Überschreitung der Erkennungsschwelle FS von Mager nach Fett. Die Fettverweilzeit TF ist entsprechend die Zeitdauer der gegenläufigen Reglerschwingung.
Bei geänderter Hardwarebeschaltung der Lambdasonden kehren sich die Spannungsverhältnisse für die Fett- und Magererkennung um.

Außerdem sind in Figur 1 noch die Fettspannung ULSF und die Magerspannung ULSM eingezeichnet. Eine vollständige Lambda-Reglerschwingung ist mit LRS bezeichnet.

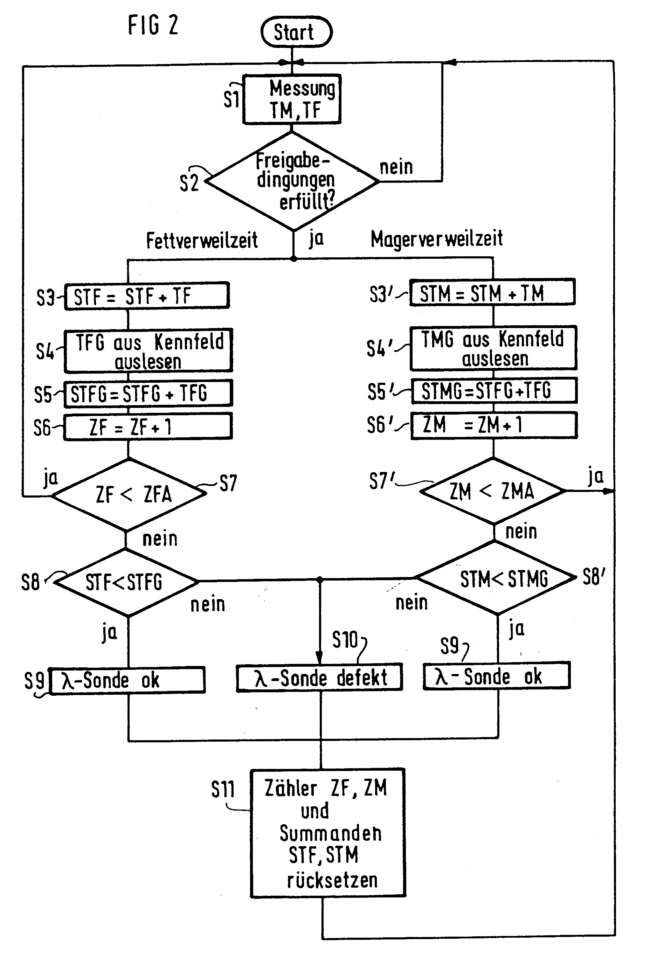

Der Ablauf des erfindungsgemäßen Verfahrens wird nun anhand der Figur 2 erläutert.

Im Verfahrensschritt S1 wird sowohl die Magerverweilzeit TM als auch die Fettverweilzeit TF gemessen. Die Messung erfolgt beispielsweise mit einem einzelnen getakteten Zeitzähler oder mit zwei getrennten Zeitzählern, von denen der eine nur die Magerverweilzeit und der andere die Fettverweilzeit mißt. Zur Messung der Magerverweilzeit beginnt der Zeitzähler zu laufen, wenn das Lambdasonden-Ausgangssignal ULS die Erkennungsschwelle MS von Fett nach Mager überschreitet. Er stoppt wieder, wenn dieses Signal die Erkennungsschwelle FS von Mager nach Fett überschreitet. Zur Bestimmung der Fettverweilzeit TF werden die Spannungsverhältnisse der gegenläufigen Lambda- Reglerschwingung ausgewertet.
Als Fett- und Magererkennungsschwelle FS MS wird ein vorgebbarer Bruchteil des Maximalwerts des Lambdasondensignals ULS definiert. Statt des letzten gemessenen einzelnen Maximalwerts beziehungsweise Minimalwerts kann dabei auch der über eine gleitende Mittelung aus den jeweiligen letzten tatsächlich gemessenen Werten ermittelte Wert verwendet werden.

Im Verfahrensschritt S2 wird überprüft, ob gewisse Freigabebedingungen für die Diagnose der Lambdasonde erfüllt sind. Die Lambda-Regelung muß aktiv sein und es darf kein Diagnosefehler vorliegen, der die Lambda-Regelung beeinträchtigen kann.
Außerdem darf keine Sekundärlufteinblasung stattfinden. die Kühlmitteltemperatur muß eine bestimmte Mindestschwelle erreicht haben und die Drosselklappe muß geöffnet sein.
Die Brennkraftmaschine muß sich in einem qusistationärem Betriebszustand befinden, d.h. es muß ein begrenzt dynamischer Betriebspunkt mindestens über eine Lambda-Reglerschwingung vorliegen, wobei die Luftmassen- bzw. die Saugrohrdruck-, die Drehzahländerung und die Änderung des Lambdaregler-Mittelwertes Basis für den begrenzt dynamischen Betrieb ist.

Sind die Freigabebedingungen erfüllt, so wird die Überprüfung mit einem Gemischsprung der Lambdasonde begonnen.

Im Verfahrensschritt S3 wird die aktuell gemessene Fettverweilzeit TF zur Summe STF der bisher schon ermittelten Fettverweilzeiten hinzugezählt.
Dann wird im Verfahrensschritt S4 aus einem Kennfeld in Abhängigkeit beispielsweise von der angesaugten Luftmasse und der Drehzahl der Brennkraftmaschine ein Fettverweilzeit-Grenzwert TFG ausgelesen und im Verfahrensschritt S5 zur Summe STFG der bisher schon ausgelesenen Grenzwerte hinzugezählt.

Anschließend wird im Verfahrensschritt S6 ein Zähler ZF, der die Zahl der gemessenen Fettverweilzeiten angibt, um 1 erhöht.

Im Verfahrensschritt S7 wird geprüft, ob der Wert des Zählers ZF kleiner ist, als ein vorgebbarer Auslösewert ZFA, der die Größe des Prüfzykluses festlegt. Ist dies der Fall, wird wieder zum Anfang des Verfahrens verzweigt. Ist der Wert aber gleich oder größer als der Auslösewert, wird im Verfahrensschritt S8 geprüft, ob die Summe der ermittelten Fettverweilzeiten STF kleiner als der Grenzwert STFG ist. Ist dies der Fall, wird im Verfahrensschritt S9 angezeigt, daß die Lambdasonde in Ordnung ist. Ist der ermittelte Summenwert STF aber gleich oder größer als der Grenzwert STFG, so wird im Verfahrensschritt S10 angezeigt, daß die Lambdasonde defekt ist.
IN beiden Fällen werden im Verfahrensschritt S11 die Zähler und Summanden zurückgesetzt und dann wird, sofern eine erneute Überprüfung der Lambdasonde stattfinden soll, zum Anfang des Verfahrens zurückgekehrt.

Zur Auswertung der Magerverweilzeit wird analog vorgegangen.

Hierzu wird im Verfahrensschritt S3' die aktuell ermittelte Magerverweilzeit TM zur Summe STM der bisher schon ermittelten Magerverweilzeiten hinzugezählt.
Dann wird im Verfahrensschritt S4' aus einem Kennfeld wieder in Abhängigkeit von den aktuellen Betriebsbedingungen der Brennkraftmaschine (beispielsweise anhand der angesaugten Luftmasse und der aktuellen Drehzahl) der Grenzwert für die Magerverweilzeit TMG ausgelesen und im Verfahrensschritt S5' zur Summe STMG der bisher schon ausgelesenen Grenzwerte hinzugezählt.

Im Verfahrensschritt S6' wird der Zähler ZM, der die Zahl der Magerverweilzeiten angibt, um 1 erhöht.

Im Verfahrensschritt S7' wird geprüft, ob der Wert des Zählers ZM kleiner als ein Auslösewert ZMA ist. Ist dies der Fall, wird wieder zum Anfang des Verfahrens zurückgegangen. Ist der Wert aber gleich oder größer als der Auslösewert, wird im Verfahrensschritt S8' geprüft, ob die Summe der ermittelten Magerverweilzeiten STM kleiner als der Grenzwert STMG ist. Ist dies der Fall wird, wie schon weiter oben beschrieben, im Verfahrensschritt S9 angezeigt, daß die Lambdasonde in Ordnung ist. Ist der Summenwert aber gleich oder größer als der Grenzwert wird, wie ebenfalls weiter oben schon beschrieben, im Verfahrensschritt S10 angezeigt, daß die Lambdasonde defekt ist.

## Patentansprüche

1. Verfahren zur Überprüfung der Funktionsfähigkeit von Lambdasonden, deren Ausgangssignal (ULS) in Abhängigkeit der Gemischzusammensetzung jeweils einen, eine fette oder magere Gemischzusammensetzung repräsentierenden Spannungspegel (ULSF, ULSMF) annimmt,
und bei dem als Kriterium zur Bewertung der Funktionsfähigkeit der Lambdasonde das zeitliche Verhalten des Ausgangssignals (ULS) während des Sondenbetriebes herangezogen wird,
**dadurch gekennzeichnet,**
daß die Verweilzeiten (Fettverweilzeit TF, Magerverweilzeit TM) ermittelt werden, während derer das Ausgangssignal (ULS) eine fette bzw. magere Gemischzusammensetzung anzeigt,
und die Lambdasonde als korrekt arbeitend eingestuft wird, wenn sowohl die Fett - als auch die Magerverweilzeiten (TF, TM) kleiner als vorgegebene, den einzelnen Verweilzeiten zugeordnete Grenzwerte (TFG, TMG) sind.

2. Verfahren nach Anspruch 1
**dadurch gekennzeichnet,**
daß die Sondenüberprüfung nur durchgeführt wird, wenn sich die Brennkraftmaschine in einem nahezu stationären Betriebszustand befindet.

3. Verfahren nach Anspruch 1
**dadurch gekennzeichnet,**
daß für jede Lambdareglerschwingung (LRS) die Grenzwerte für die maximalen Verweilzeiten betriebspunktabhängig einem Kennfeld entnommen werden.

4. Verfahren nach Anspruch 3
**dadurch gekennzeichnet,**
daß die Grenzwerte in Abhängigkeit der angesaugten Luftmasse und der Drehzahl der Brennkraftmaschine abgelegt sind.

5. Verfahren nach Anspruch 3
**dadurch gekennzeichnet,**
daß die Grenzwerte in Abhängigkeit des Saurohrdruckes und der Drehzahl der Brennkraftmaschine abgelegt sind.

6. Verfahren nach Anspruch 1
**dadurch gekennzeichnet,**
daß eine vorgebbare Anzahl von zeitlich aufeinanderfolgenden Lambdareglerschwingungen (LRS)ausgewertet werden und die dabei erhaltenen einzelnen Fettverweilzeiten (TF) und Magerverweilzeiten (TM) getrennt aufsummiert werden und die Lambdasonde als in Ordnung betrachtet wird, wenn die Summe der ermittelten Verweildauern sowohl im Fett- als auch im Magerbereich kleiner ist, als der aus dem Kennfeld ausgelesene und aufsummierte entsprechende Grenzwert.
